# EUROPEAN PATENT APPLICATION

(11) **EP 2 991 358 A2**
(43) Date of publication of application: **02.03.2016**
(21) Application number: 15182483.6
(22) Date of filing: 26.08.2015
(51) Int. Cl.: H04N 21/258, H04N 21/478

(54) **COMMUNICATION OF CLOUD-BASED CONTENT TO A DRIVER**

(30) Priority: 27.08.2014 US 201414470838
(71) Applicant: Toyota Jidosha Kabushiki Kaisha, Toyota-shi, Aichi 471-8571 (JP)
(72) Inventor: SISBOT, Emrah Akin, Mountain View, CA 94040 (US); YALLA, Veeraganesh, Mountain View, CA 94043 (US)
(74) Representative: TBK

(57) **Abstract**

The disclosure includes a system and method for generating cloud-based content for a heads-up display. The cloud server includes a processor and a memory storing instructions that, when executed, cause the system to: register the first user and the second user, generate a social graph between with a connection between the first user and the second user, receive vehicle data from the first user and the second user, and process the data according to attributes. The system includes a processor and a memory storing instructions that, when executed, cause the system to: transmit sensor data to a cloud server, receive processed content from the cloud server that is aggregated from multiple vehicles, filter the processed content for a first user, selecting a graphic for the filtered content, and position the graphic to correspond to the first user's eye frame.

## Description

### TECHNICAL FIELD

The specification relates to generating cloud-based content for a heads-up display.

### BACKGROUND ART

Nowadays many mobile devices use the cloud as a source of information. Personal information, such as social media, profiles, and photographs are found in the cloud and are accessible to mobile devices. This information, however, is used mainly for entertainment.

Currently vehicles use outdated information, such as maps that show the last updated version of a road. Users may access traffic updates for the maps, but the information may be too generic to be useful.

### SUMMARY OF INVENTION

According to one innovative aspect of the subject matter described in this disclosure, a system for generating cloud-based content for a heads-up display includes a processor and a memory storing instructions that, when executed, cause the system to: transmit sensor data to a cloud server, receive processed content from the cloud server that is aggregated from multiple vehicles, filter the processed content for a first user, selecting a graphic for the filtered content, and position the graphic to correspond to the first user's eye frame.

In general, another innovative aspect of the subject matter described in this disclosure may be embodied in methods that include: transmitting sensor data to a cloud server with a processor-based computing device programmed to perform the transmitting, receiving processed content from the cloud server that is aggregated from multiple vehicles, filtering the processed content for a first user, selecting a graphic for the filtered content, and positioning the graphic to correspond to the first user's eye frame.

These and other embodiments may each optionally include one or more of the following operations and features. For instance, the features include: keeping content from a second user that has a connection with the first user; the graphic for the filtered content including a point of interest on a map from the first user, the point of interest being within a threshold distance of the first user; prior to receiving processed content from the cloud server, the cloud server registering the first user and the second user, generating a social graph between with a connection between the first user and the second user, receiving vehicle data from the first user and the second user, processing the vehicle data according to attributes; and the vehicle data including a point of interest on a map identified by the second user, and the processed content including information about an entity as detected by a first client device that views the entity before the first user.

In some embodiments, the operations can include: associating content with categories and wherein filtering the processed content is based on the categories; generating a user profile for the first user, the user profile including categories and wherein filtering the processed content for the first user includes filtering the processed content based on the processed content including the categories in the user profile; organizing the filtered content according to relevancy and selecting graphics for a predetermined number of pieces of filtered content that fit on a heads-up display; and comparing current sensor data to historical sensor data to determine that the first user is in a hurry based on at least one of leaving less room between the first client device and another first client device and using brakes more frequently and wherein filtering the processed content is further based on the user being in the hurry.

Other aspects include corresponding methods, systems, apparatus, and computer program products for these and other innovative aspects.

The disclosure is particularly advantageous in a number of respects. For example, the system can provide personalized information to a user that is organized to reduce the time it takes the user to understand the information. In addition, the heads-up display generates graphics that do not require the driver to change focus to switch between viewing the road and the graph. As a result, the user can react more quickly and possibly avoid a collision.

### BRIEF DESCRIPTION OF DRAWINGS

The disclosure is illustrated by way of example, and not by way of limitation in the figures of the accompanying drawings in which like reference numerals are used to refer to similar elements.
Figure 1 is a block diagram illustrating an example system for generating spatial information for a heads-up display.
Figure 2A is a block diagram illustrating an example cloud application for organizing content.
Figure 2B is a block diagram illustrating an example content application for generating a heads-up display with updates.
Figure 3A is an example graphic representation of a first car being followed by a second car.
Figure 3B is an example graphic representation of the first car turning while the second car is stuck at a light.
Figure 3C is an example graphic representation of the first car making a left-hand turn while out of view of the second car.
Figure 3D is an example graphic representation of the first car being out of view of the second car.
Figure 3E is a graphic representation example of a heads-up display.
Figure 4 is a flowchart of an example method for organizing content with a cloud application.
Figure 5 is a flowchart of an example method for generating content for a heads-up display.
Figure 6 is a diagram illustrating an example configuration of a heads-up display.

### DESCRIPTION OF EMBODIMENTS

### Example System Overview

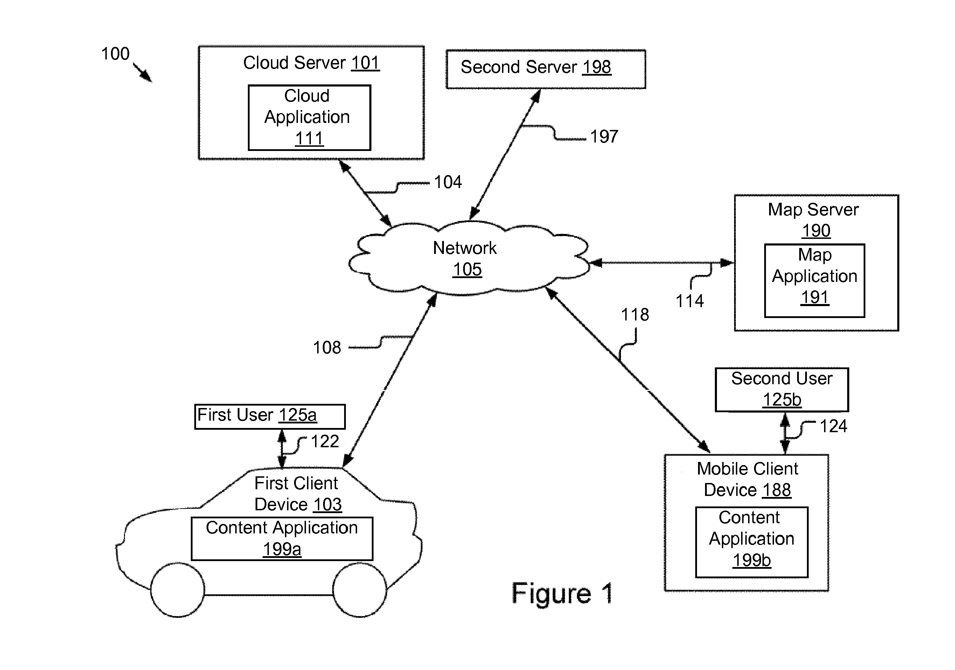

Figure 1 illustrates a block diagram of one embodiment of a system 100 for generating cloud-based content for a heads-up display. The system 100 includes a first client device 103, a mobile client device 188, a cloud server 101, a second server 198, and a map server 190. The first client device 103 and the mobile client device 188 can be accessed by users 125a and 125b (also referred to herein individually and collectively as user 125), via signal lines 122 and 124, respectively. In the illustrated embodiment, these entities of the system 100 may be communicatively coupled via a network 105. The system 100 may include other servers or devices not shown in Figure 1 including, for example, a traffic server for providing traffic data, a weather server for providing weather data, and a power service server for providing power usage service (e.g., billing service).

The first client device 103 and the mobile client device 188 in Figure 1 can be used by way of example. While Figure 1 illustrates two client devices 103 and 188, the disclosure applies to a system architecture having one or more client devices 103, 188. Furthermore, although Figure 1 illustrates one network 105 coupled to the cloud server 101, the first client device 103, the mobile client device 188, the second server 198, and the map server 190, in practice one or more networks 105 can be connected. While Figure 1 includes one cloud server 101, one second server 198, and one map server 190, the system 100 could include one or more cloud servers 101, one or more second servers 198, and one or more map servers 190.

The network 105 can be a conventional type, wired or wireless, and may have numerous different configurations including a star configuration, token ring configuration, or other configurations. Furthermore, the network 105 may include a local area network (LAN), a wide area network (WAN) (e.g., the Internet), or other interconnected data paths across which multiple devices may communicate. In some embodiments, the network 105 may be a peer-to-peer network. The network 105 may also be coupled to or includes portions of a telecommunications network for sending data in a variety of different communication protocols. In some embodiments, the network 105 includes Bluetooth® communication networks or a cellular communications network for sending and receiving data including via short messaging service (SMS), multimedia messaging service (MMS), hypertext transfer protocol (HTTP), direct data connection, WAP, e-mail, etc. In some embodiments, the network 105 may include a GPS satellite for providing GPS navigation to the first client device 103 or the mobile client device 188. The network 105 may be a mobile data network such as 3G, 4G, LTE, Voice-over-LTE ("VoLTE"), or any other mobile data network or combination of mobile data networks.

The cloud server 101 can be a hardware server that includes a processor, a memory, and network communication capabilities. In the illustrated embodiment, the cloud server 101 is coupled to the network 105 via a signal line 104. The cloud server 101 sends and receives data to and from other entities of the system 100 via the network 105.

The cloud server 101 includes a cloud application 111. The cloud application 111 generates a social network. The social network can be a type of social structure where the users 125 may be connected by a common feature. The common feature includes relationships/connections, e.g., friendship, family, work, an interest, etc. The common features may be provided by one or more social networking systems including explicitly defined relationships and relationships implied by social connections with other online users, where the cloud server 111 generates a social graph to track the connections between users.

The cloud application 111 receives vehicle data from first client devices 103 and/or mobile client devices 188. For example, a first user generates a point of interest on a map of something that the first user thinks is interesting. The cloud application 111 processes the vehicle data according to attributes. For example, the cloud application 111 includes the first user as a first attribute and the location of the point of interest as a second attribute. The cloud application 111 transmits the processed content to the content application.

In some embodiments, a content application 199a can be operable on the first client device 103. The first client device 103 can be a mobile client device with a battery system. For example, the first client device 103 can be one of a vehicle (e.g., an automobile, a bus), a bionic implant, or any other mobile system including non-transitory computer electronics and a battery system. In some embodiments, the first client device 103 may include a computing device that includes a memory and a processor. In the illustrated embodiment, the first client device 103 is communicatively coupled to the network 105 via signal line 108.

In other embodiments, a content application 199b can be operable on the mobile client device 188. The mobile client device 188 may be a portable computing device that includes a memory and a processor, for example, an in-dash car device, a laptop computer, a tablet computer, a mobile telephone, a personal digital assistant ("PDA"), a mobile e-mail device, a portable game player, a portable music player, or other portable electronic device capable of accessing the network 105. In some embodiments, the content application 199b may act in part as a thin-client application that may be stored on the first client device 103 and in part as components that may be stored on the mobile client device 188. In the illustrated embodiment, the mobile client device 188 is communicatively coupled to the network 105 via a signal line 118.

In some embodiments, the first user 125a and the second user 125b can be the same user 125 interacting with both the first client device 103 and the mobile client device 188. For example, the user 125 can be a driver sitting in the first client device 103 (e.g., a vehicle) and operating the mobile client device 188 (e.g., a smartphone). In some other embodiments, the first user 125a and the second user 125b may be different users 125 that interact with the first client device 103 and the mobile client device 188, respectively. For example, the first user 125a could be a drive that drives the first client device 103 and the second user 125b could be a passenger that interacts with the mobile client device 188.

The content application 199 can be software for generating cloud-based content for a heads-up display. The content application 199 transmits sensor data to the cloud server 101 and receives processed content from the cloud server 101 that was aggregated from multiple first client devices 103 and/or mobile client devices 188. For example, the content application 199 filters the processed content for a second user. For example, in continuing with the example above, the content application 199 filters the content according to the social graph. As a result, the content application 199 filters the point of interest on the map from the first user because the first and second user are connected on the social graph. The content application 199 selects a graphic for the filtered content. For example, the content application 199 selects a map icon. The content application 199 positions the graphic to correspond to the first user's eye frame. For example, the content application 199 transmits instructs to the heads-up display to project the map icon over the physical area for the point of interest when the second user drives past the point of interest.

In some embodiments, the content application 199 can be implemented using hardware including a field-programmable gate array ("FPGA") or an application-specific integrated circuit ("ASIC"). In some other embodiments, the content application 199 can be implemented using a combination of hardware and software. The content application 199 may be stored in a combination of the devices and servers, or in one of the devices or servers.

The map server 190 can be a hardware server that includes a processor, a memory, and network communication capabilities. In the illustrated embodiment, the map server 190 is coupled to the network 105 via a signal line 114. The map server 190 sends and receives data to and from other entities of the system 100 via the network 105. The map server 190 includes a map application 191. The map application 191 may generate a map and directions for the user. In one embodiment, the content application 199 receives a request for directions from the user 125 to travel from point A to point B and transmits the request to the map server 190. The map application 191 generates directions and a map and transmits the directions and map to the content application 199 for display to the user. In some embodiments, the content application 199 adds the directions to the vehicle data 293 because the directions can be used to determine the path of the first mobile device 103.

In some embodiments, the system 100 includes a second server 198 that is coupled to the network via signal line 197. The second server 198 may store additional information that is used by the content application 199, such as infotainment, music, etc. In some embodiments, the second server 198 is a parking structure that tracks availability of parking spots. In some embodiments, the second server 198 receives a request for data from the content application 199 (e.g., data for streaming a movie, music, etc.), generates the data, and transmits the data to the content application 199.

### Example Cloud Application

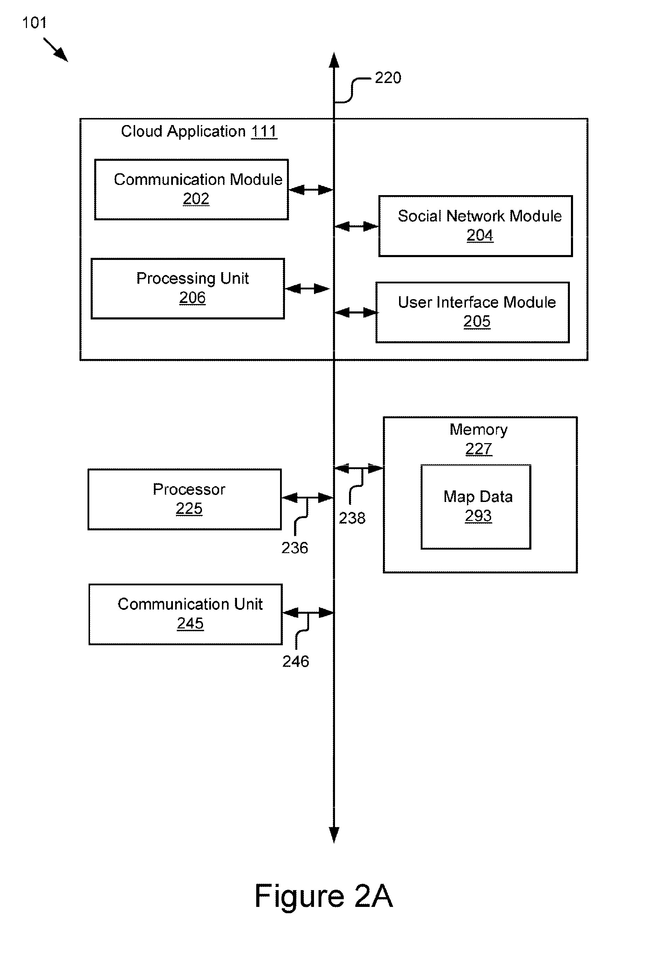

Referring now to Figure 2A, an example of the cloud application 111 is shown in more detail. Figure 2A is a block diagram of a cloud server 101 that includes the cloud application 111, a processor 225, a memory 227, and a communication unit 245 according to some examples. The components of the cloud server 101 are communicatively coupled by a bus 220.

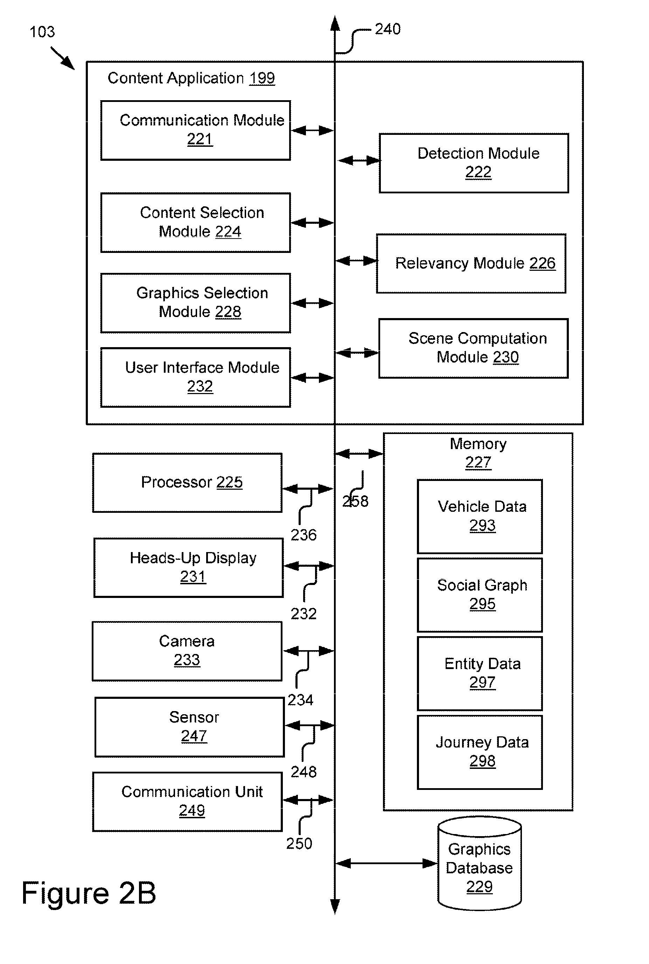

The processor 225 includes an arithmetic logic unit, a microprocessor, a general-purpose controller, or some other processor array to perform computations and provide electronic display signals to a display device. The processor 225 is coupled to the bus 220 for communication with the other components via a signal line 236. The processor 225 processes data signals and may include various computing architectures including a complex instruction set computer (CISC) architecture, a reduced instruction set computer (RISC) architecture, or an architecture implementing a combination of instruction sets. Although Figure 2 includes a single processor 225, multiple processors 225 may be included. Other processors, operating systems, sensors, displays, and physical configurations may be possible.

The memory 227 stores instructions or data that may be executed by the processor 225. The memory 227 is coupled to the bus 220 for communication with the other components via a signal line 238. The instructions or data may include code for performing the techniques described herein. The memory 227 may be a dynamic random access memory (DRAM) device, a static random access memory (SRAM) device, flash memory, or some other memory device. In some embodiments, the memory 227 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

In some embodiments, the memory 227 stores a social graph 295 that is generated by the social network module 204. The social graph 295 includes connections between users. For example, the social graph 295 includes friendships, a first user that follows updates from a second user, a business relationship between a third user and a fourth user, etc. In some embodiments, the social graph 295 also includes categories of interest associated with the users.

The communication unit 245 transmits and receives data to and from the cloud server 101. The communication unit 245 is coupled to the bus 220 via a signal line 246. In some embodiments, the communication unit 245 includes a port for direct physical connection to the network 105 or to another communication channel. For example, the communication unit 245 includes a USB, SD, CAT-5, or similar port for wired communication with the first client device 103. In some embodiments, the communication unit 245 includes a wireless transceiver for exchanging data with the first client device 103 or other communication channels using one or more wireless communication methods, including IEEE 802.11, IEEE 802.16, BLUETOOTH®, or another suitable wireless communication method.

In some embodiments, the communication unit 245 includes a cellular communications transceiver for sending and receiving data over a cellular communications network including via short messaging service (SMS), multimedia messaging service (MMS), hypertext transfer protocol (HTTP), direct data connection, WAP, e-mail, or another suitable type of electronic communication. In some embodiments, the communication unit 245 includes a wired port and a wireless transceiver. The communication unit 245 also provides other conventional connections to the network 105 for distribution of files or media objects using standard network protocols including TCP/IP, HTTP, HTTPS, and SMTP, etc.

In some embodiments, the cloud application 111 includes a communication module 202, a social network module 204, a processing unit 206, and a user interface module 205.

The communication module 202 can be software including routines for handling communications between the cloud application 111 and other components of the cloud server 101. In some embodiments, the communication module 202 can be a set of instructions executable by the processor 235 to provide the functionality described below for handling communications between the cloud application 111 and other components of the cloud server 101. In some embodiments, the communication module 202 can be stored in the memory 237 of the cloud server 101 and can be accessible and executable by the processor 235.

The communication module 202 sends and receives data, via the communication unit 245, to and from the cloud server 101 to one or more of the first client device 103, the mobile client device 188, the map server 190, and the second server 198. For example, the communication module 202 receives, via the communication unit 245, information about traffic updates from the first client device 103. The communication module 202 sends the traffic update to the cloud application 111 for aggregating with other content.

In some embodiments, the communication module 202 may handle communications between components of the cloud application 202. For example, the communication module 202 receives user input from the user interface module 205 and transmits the user input to the social network module 204.

The social network module 204 can be software including routines for generating a social network. In some embodiments, the social network module 204 can be a set of instructions executable by the processor 235 to provide the functionality described below for generating a social network. In some embodiments, the social network module 204 can be stored in the memory 237 of the cloud server 101 and can be accessible and executable by the processor 235.

The social network module 204 may register each user. For example, a user profiles a username and password. In some embodiments, the social network module 204 generates a user profile for the user that includes the username and password. The user profile may also include categories that the user is interested in. The categories may be explicitly provided by the user during registration or at other times, for example, when the user likes a particular subject within the social network. The social network module 204 may also infer that the user is interested in a category, for example, when the user reads a threshold number of articles that are associated with a category.

The social network module 204 generates a social graph 295 that describes connections between users. In some embodiments, two users must agree to be connected. In other embodiments, one user can follow another user. In yet another embodiment, the social network module 204 automatically connects users. For example, where users live in the same area, travel a predetermined number of times along the same paths (e.g. two users have the same route for commuting to work), users have a predetermined number of communications, etc.

In some embodiments, the social network module 204 generates a social network where content is posted, users may comment, articles may be shared, photos may be uploaded, etc. The social network module 204 may generate groups where users can discuss a category of information, such as a group for establishing rideshares or identifying speedtraps.

The processing unit 206 can be software including routines for processing content from first client devices 103 and/or mobile client devices 188. In some embodiments, the processing unit 206 can be a set of instructions executable by the processor 235 to provide the functionality described below for processing content. In some embodiments, the processing unit 206 can be stored in the memory 237 of the cloud server 101 and can be accessible and executable by the processor 235.

The processing unit 206 receives vehicle data 293 from the first client devices 103 and/or mobile client devices 188 based on sensor information and user input. For example, the processing unit 206 receives vehicle data 293 about the vehicles' locations, speeds, paths, drivers' attitudes, drivers' intentions, sensor data, detected entities, traffic conditions, points of interest, user input, etc. In some embodiments, the processing unit 206 receives information from the map server 190 including maps requested by users. The processing unit 206 may also receive information from the second server 198. For example, the second server 198 may be parking structure that provides information about parking availability. In another example, the second server 198 may provide infotainment and provide information about user consumption of infotainment, such as commonly selected music to listen to or movies to watch.

The processing unit 206 processes the vehicle data according to attributes. For example, the processing unit 206 associates vehicle data 293 with an identity of a user, a location where the information originated, a timestamp when the information was provided, categories associated with the information, etc. In some embodiments, the processing unit 206 anonymizes the data to generate trends, such as for the purpose of identifying commonly traveled areas. In embodiments where the users provide permission, the processing unit 206 maintains the identity of the users, such as when a first user wants to share a message with a second user through the system.

The user interface module 205 can be software including routines for generating graphical data for providing user interfaces. In some embodiments, the user interface module 205 can be a set of instructions executable by the processor 235 to provide the functionality described below for generating graphical data for providing user interfaces. In some embodiments, the user interface module 205 can be stored in the memory 237 of the cloud server 101 and can be accessible and executable by the processor 235.

In some embodiments, the user interface module 205 generates a user interface for the user to provide information for registration. For example, the user interface includes fields for defining a username, password, providing categories of interest for the user profile, etc. The user interface may also include a permissions section where the user can specify whether the user wants the data to be anonymized. In some embodiments, the user interface module 205 generates a user interface for users to identify other users for making a connection. In yet another embodiment, the user interface module 205 generates graphical data for displaying a social network, generating posts, uploading images, providing comments, etc.

### Example Content Application

Referring now to Figure 2B, an example of the content application 199 is shown in more detail. Figure 2B is a block diagram of a first client device 103 that includes the content application 199, a processor 255, a memory 257, a graphics database 229, a heads-up display 231, a camera 233, a sensor 247, and a communication unit 249 according to some examples. The components of the first client device 103 are communicatively coupled by a bus 240.

Although Figure 2B includes the content application 199 being stored on the first client device 103, persons of ordinary skill in the art will recognize that some of the components the content application 199 can be stored on the mobile client device 188 where certain hardware would not be applicable. For example, the mobile client device 188 would not include the heads-up display 231 or the camera 233. In embodiments where the content application 199 is stored on the mobile client device 188, the content application 199 may receive information from the sensors on the first client device 103 and use the information to determine the graphic for the heads-up display 231, and transmit the graphic to the heads-up display 231 on the first client device 103. In some embodiments, the content application 199 can be stored in part on the first client device 103 and in part on the mobile client device 188. In some embodiments, components of the cloud application 111 may also be part of the content application 199. For example, the content application 199 could include the social network module 204.

The heads-up display 231 includes hardware for displaying three-dimensional (3D) graphical data in front of a user such that they do not need to look away from the road to view the graphical data. For example, the heads-up display 231 may include a physical screen or it may project the graphical data onto a transparent film that is part of the windshield of the first client device 103 or part of a reflector lens. In some embodiments, the heads-up display 231 is included as part of the first client device 103 during the manufacturing process or is later installed. In other embodiments, the heads-up display 231 is a removable device. In some embodiments, the graphical data adjusts a level of brightness to account for environmental conditions, such as night, day, cloudy, brightness, etc. The heads-up display is coupled to the bus 240 via signal line 232.

The heads-up display 231 receives graphical data for display from the content application 199. For example, the heads-up display 231 receives a graphic of a car from the content application 199 with a transparent modality. The heads-up display 231 displays graphics as three-dimensional Cartesian coordinates (e.g., with x, y, z dimensions).

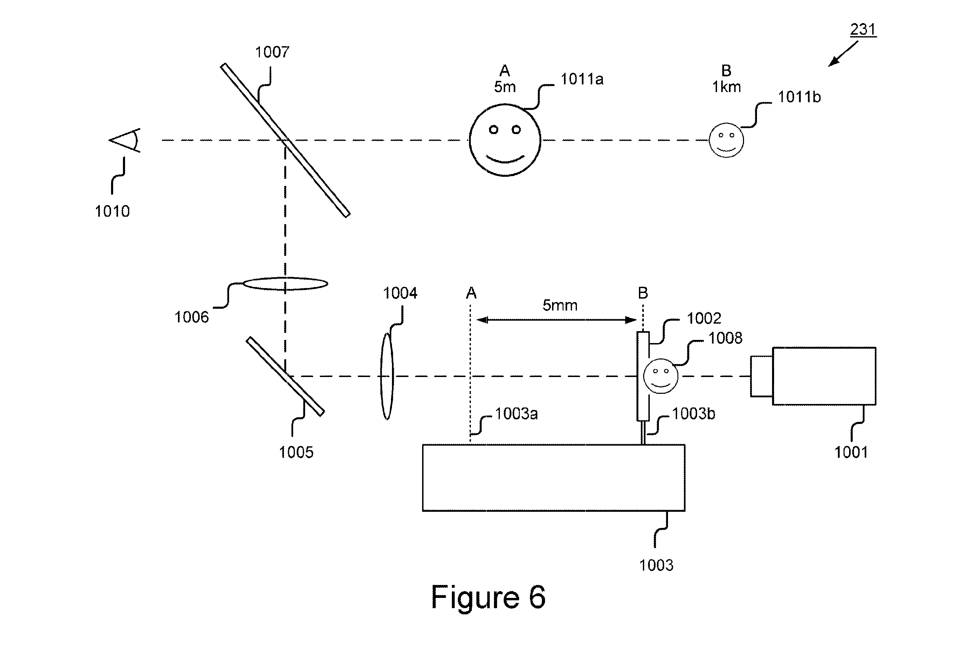

Referring now to Figure 6, anexample configuration of the heads-up display 231 is shown in detail. The heads-up display 231 includes a projector 1001, a movable screen 1002, a screen driving unit 1003, an optical system (including lenses 1004, 1006, reflector 1005, etc.). The projector 1001 may be any kind of projector such as a digital mirror device (DMD) project, a liquid crystal projector. The projector 1001 projects an image (graphic) 1008 on the movable screen 1002 The movable screen 1002 includes a transparent plate and so the projected image lights transmit through the movable screen 1002 to be projected on the windshield 1007 of a vehicle (e.g., first client device 103). The image projected on the windshield 1007 is perceived by a driver 1010 as if it is a real object (shown as 1011a, 1011b) that exists in the three-dimensional space of the real world, as opposed to an object that is projected on the windshield.]

The heads-up display 231 is capable of controlling the direction of the image relative to the driver 1010 (in other words, the image position in the windshield) by adjusting the projection position on the screen 1002. Further the screen 1002 is movable by the screen-driving unit 1003 in the range between the positions 1003a and 1003b. Adjusting the position of the screen 1002 can vary the depth (distance) of the projected image from the driver 1010 in the real world. In one example, the movable range of the screen 1002 (distance between positions 1003a and 1003b) may be 5mm, which correspond to from 5m away to infinity in the real world. The use of the heads-up display 231 allows the driver 1010 to perceive the projected image exist in the real world (three-dimensional space). For example, when an image is projected at the same three-dimensional position (or substantially same depth at least) as a real object (such as a pedestrian, car, etc.), the driver does not need to adjust eye focus in order to view the projected image, resulting in easy grasp of the projected image while looking at the real object.

The heads-up display 231 depicted in Figure 6 is provided by way of example. Other examples are possible. These examples may include heads-up displays having more or less complexity than the heads-up display 231 depicted in Figure 6. For example, it is anticipated that in the future there will be heads-up displays that do not require movable parts such as the movable screen 1002. For example, a static screen that does not move may be deployed. The content application 103 described above with reference to Figure 2B is designed to be operable with such components.

The camera 233 is hardware for capturing images outside of the first client device 103 that are used by the detection module 222 to identify entities. In some embodiments, the camera 233 captures video recordings of the road. The camera 233 may be inside the first client device 103 or on the exterior of the first client device 103. In some embodiments, the camera 233 is positioned in the front part of the car and records entities on or near the road. For example, the camera 233 is positioned to record everything that the user can see. The camera 233 transmits the images to the content application 199. Although only one camera 233 is illustrated, multiple cameras 233 may be used. In embodiments where multiple cameras 233 are used, the cameras 233 may be positioned to maximize the views of the road. For example, the cameras 233 could be positioned on each side of the grill. The camera is coupled to the bus 240 via signal line 234.

The sensor 247 is any device that senses physical changes. The first client device 103 may have one type of sensor 247 or many types of sensors. The sensor 247 is coupled to the bus 220 via signal line 248.

In one embodiment, the sensor 247 includes a laser-powered sensor, such as light detection and ranging (lidar) that are used to generate a three-dimensional map of the environment surrounding the first client device 103. Lidar functions as the eyes of the first client device 103 by shooting bursts of energy at a target from lasers and measuring the return time to calculate the distance. In another embodiment, the sensor 247 includes radar, which functions similar to lidar but uses microwave pulses to determine the distance and can detect smaller objects at longer distances.

In another embodiment, the sensor 247 includes hardware for determining vehicle data 293 about the first client device 103. For example, the sensor 247 is a motion detector, such as an accelerometer that is used to measure acceleration of the first client device 103. In another example, the sensor 247 includes location detection, such as a global positioning system (GPS), location detection through triangulation via a wireless network, etc. In yet another example, the sensor 247 includes hardware for determining the status of the first client device 103, such as hardware for determining whether the lights are on or off, whether the windshield wipers are on or off, etc. In some embodiments, the sensor 247 transmits the vehicle data 293 to the detection module 222 or the danger assessment module 226 via the communication module 202. In other embodiments, the sensor 247 stores the location information as part of the vehicle data 293 in the memory 227.

In some embodiments, the sensor 247 may include a depth sensor. The depth sensor determines depth using structured light, such as a speckle pattern of infrared laser light. In another embodiment, the depth sensor determines depth using time-of-flight technology that determines depth based on the time it takes a light signal to travel between the camera 233 and an object. For example, the depth sensor is a laser rangefinder. The depth sensor transmits the depth information to the detection module 222 via the communication module 202 or the sensor 247 stores the depth information as part of the vehicle data 293 in the memory 227.

In other embodiments, the sensor 247 may include an infrared detector, a motion detector, a thermostat, a sound detector, and any other type of sensors. For example, the first client device 103 may include sensors for measuring one or more of a current time, a location (e.g., a latitude, longitude, and altitude of a location), an acceleration of a vehicle, a velocity of a vehicle, a fuel tank level, and a battery level of a vehicle, etc. The sensors can be used to create vehicle data 293. The vehicle data 293 can also include any information obtained during travel or received from the cloud server 101, the second server 198, the map server 190, or the mobile client device 188.

The processor 255 and the communication unit 249 are similar to the processor 225 and the communication unit 245 that are discussed with reference to Figure 2A and will not be discussed again.

The memory 257 stores instructions or data that may be executed by the processor 235. The memory 237 is coupled to the bus 240 for communication with the other components via a signal line 338. The instructions or data may include code for performing the techniques described herein. The memory 237 may be a dynamic random access memory (DRAM) device, a static random access memory (SRAM) device, flash memory, or some other memory device. In some embodiments, the memory 237 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis. The memory is coupled to the bus 240 via signal line 258.

As illustrated in Figure 2B, the memory 257 stores vehicle data 293, a social graph 295, entity data 297, and journey data 298. The vehicle data 293 includes information about the first client device 103, such as the speed of the vehicle, whether the vehicle's lights are on or off, the intended route of the vehicle as provided by map server 190 or another application. In some embodiments, the sensor 247 may include hardware for determining vehicle data 293.The vehicle data 293 is used by the danger assessment module 226 to determine a danger index for the entity.

The content application 199 receives the social graph 295 from the cloud server 101 and stores the social graph 295 in the memory 257. The social graph 295 includes connections between users. For example, the social graph 295 includes friendships, a first user that follows updates from a second user, a business relationship between a third user and a fourth user, etc. In some embodiments, the social graph 295 also includes categories of interest associated with the users.

The entity data 297 includes information about the entity. For example, the entity data 297 includes a position and an orientation of the entity in a sensor frame, a bounding box of the entity, a direction of the motion of the entity and its speed. In some embodiments, the entity data 297 also includes historical data about how entities behave.

The journey data 298 includes information about the user's journey, such as start points, destinations, durations, routes associated with historical journeys, etc. For example, the journey data 298 could include a log of all locations visited by the first client device 103, all locations visited by the user 125 (e.g., locations associated with both the first client device 103 and the mobile client device 188), locations requested by the user 125, etc.

The graphics database 229 includes a database for storing graphics information. The graphics database 229 contains a set of pre-constructed two-dimensional and three-dimensional graphics that represent different entities. For example, the two-dimensional graphic may be a 2D pixel matrix, and the three-dimensional graphic may be a 3D voxel matrix. The graphics may be simplified representations of entities to decrease cognitive load on the user. For example, instead of representing a pedestrian as a realistic rendering, the graphic of the pedestrian includes a walking stick figure. In some embodiments, the graphics database 229 is a relational database that responds to queries. For example, the graphics selection module 228 queries the graphics database 229 for graphics that match the entity data 297.

In some embodiments, the content application 199 includes a communication module 221, an object detector 222, a content selection module 224, a relevancy module 226, a graphics selection module 228, a scene computation module 230, and a user interface module 232.

The communication module 221 can be software including routines for handling communications between the content application 199 and other components of the first client device 103. In some embodiments, the communication module 221 can be a set of instructions executable by the processor 255 to provide the functionality described below for handling communications between the content application 199 and other components of the first client device 103. In some embodiments, the communication module 221 can be stored in the memory 257 of the first client device 103 and can be accessible and executable by the processor 255.

The communication module 221 sends and receives data, via the communication unit 245, to and from one or more of the first client device 103, the mobile client device 188, the map server 190, the cloud server 101, and the second server 198 depending upon where the content application 199 is stored. For example, the communication module 221 receives, via the communication unit 245, map data from the map server 190 about the intended path for the first client device 103. The communication module 221 sends the map data to the content selection module 224 for use in determining what content should be filtered based on similarity to the user's path.

In some embodiments, the communication module 221 receives data from components of the content application 199 and stores the data in the memory 237. For example, the communication module 221 receives data from the sensors 247, and transmits the data to the cloud server 101 for processing.

In some embodiments, the communication module 221 may handle communications between components of the content application 199. For example, the communication module 221 receives filtered content from the content selection module 224 and transmits the filtered content to the relevancy module 226 for ranking.

The detection module 222 can be software including routines for receiving data from the sensor 247 about an entity or a user's intention. In some embodiments, the detection module 222 can be a set of instructions executable by the processor 255 to provide the functionality described below for receiving sensor data from the sensor 247. In some embodiments, the detection module 222 can be stored in the memory 257 of the first client device 103 and can be accessible and executable by the processor 255.

In some embodiments, the detection module 222 receives sensor data from at least one of the sensor 247 or the camera 233 and generates entity data 297 about the entities. For example, the detection module 222 determines the position of the entity relative to the sensor 247 or camera 233. In another example, the detection module 222 receives images or video from the camera 233 and identifies the location of entities, such as pedestrians or stationary objects including buildings, lane markers, obstacles, etc.

The detection module 222 can use vehicle data 293 generated from the sensor 247, such as a location determined by GPS, to determine the distance between the entity and the first client device 103. In another example, the sensor 247 includes lidar or radar that can be used to determine the distance between the first client device 103 and the entity. The detection module 222 returns an n-tuple containing the position of the entity in a sensor frame (x, y, z)ₛ. In some embodiments, the detection module 222 uses the position information to determine a path for the entity. The detection module 222 adds the path to the entity data 297.

The detection module 222 may transmit the entity data 297 to the cloud server 101 so that other drivers that are taking the same path may receive information about the entity before the entity is within visual range. For example, where a first client device 103 detects the entity before another first client device 103 travels on the same or similar path, the cloud server 101 may transmit information to the content application 199 about the entity. For example, the detection module 222 may receive information about the speed of the entity from the cloud server 101.

In some embodiments, the detection module 222 determines the driver's intentions or attitude based on sensor 247 data. For example, the detection module 222 may determine that the user is in a hurry based on how close the first client device 103 gets to the car ahead of it, how frequently the driver hits the brakes, and how fast the first client device 103 drives. In some embodiments, the detection module 222 compares the current vehicle data 293 to historical vehicle data 293 and journey data 298 to determine whether the driver is driving in a way that is different from historical behavior.

The content selection module 224 can be software including routines for filtering content. In some embodiments, the content selection module 224 can be a set of instructions executable by the processor 255 to provide the functionality described below for filtering content. In some embodiments, the categorization module 224 can be stored in the memory 257 of the first client device 103 and can be accessible and executable by the processor 255.

The content selection module 224 receives processed content from the cloud server 101 that is aggregated from multiple vehicles. The content selection module 224 filters the processed content for a first user. For example, where the first user is connected to a second user in the social graph 295, the content selection module 224 filters (or selects) the processed content to include information from the second user. In another example, where the first user is driving a first client device 103 that within a predetermined distance of other first client devices 103, the content selection module 224 filters (or selects) the processed content to include any information about entities that the other first client devices 103 detected. In yet another example, where the first client device 103 is following another first client device 103 as indicated by maps provided by the map server 190 or inferred from a first user that is friends with a second user following the first user for a threshold amount of time, the content selection module 224 filters (or selects) content to include entity information from the other first client device 103.

In another embodiment, the content selection module 224 filters content based on the content matching a category that is associated with the user. For example, where the driver included in a user profile that the driver enjoys eating at Mexican restaurants, the content selection module 224 includes content from other users about their positive experiences at Mexican restaurants that are on the path that the driver is taking.

In some embodiments, the content selection module 224 filters the content based on user intention or attitude. For example, where the detection module 222 determines that the driver is in a hurry, the content selection module 224 filters out content about stores that are having sales because the driver does not have time to stop and could be annoyed by the content. Conversely, if the detection module 222 determines that the driver is not in a hurry and is not driving to work, the content selection module 224 could identify content about interesting events occurring on the driver's path, such as a farmer's market that the driver might enjoy.

In some embodiments, the content selection module 224 updates the filter based on user reaction. For example, where the user explicitly asks not to receive information about one of the categories in the user's user profile, the content selection module 224 filters out content that includes that category.

The relevancy module 226 can be software including routines for ranking filtered content. In some embodiments, the relevancy module 226 can be a set of instructions executable by the processor 255 to provide the functionality described below for ranking filtered content. In some embodiments, the relevancy module 226 can be stored in the memory 257 of the first client device 103 and can be accessible and executable by the processor 255.

The relevancy module 226 may be referred to as a car agent. The relevancy module 226 may decide which pieces of content are most relevant. In some embodiments, the relevancy module 226 scores filtered content based on the user profile. For example, the relevancy module 226 applies a score to content that is associated with categories that the user is interested in, content from a person connected to the user in the social graph 295, and content that is part of the path that the user is taking. The relevancy module 226 may rank the content and then provide a set number of pieces of filtered content to the graphics selection module 228 based on the number of graphics that can fit on the heads-up display 231.

The graphics selection module 228 can be software including routines for selecting a graphic and a modality to represent the entity. In some embodiments, the graphics selection module 228 can be a set of instructions executable by the processor 255 to provide the functionality described below for selecting the graphic and the modality to represent the entity. In some embodiments, the graphics selection module 228 can be stored in the memory 257 of the first client device 103 and can be accessible and executable by the processor 255.

In some embodiments, the graphics selection module 228 queries the graphics database 229 for a matching graphic. In some embodiments, the graphics selection module 228 provides an identification of the entity as determined by the detection module 222. For example, the graphics selection module 228 queries the graphics database 229 for a graphic of fast food. In another embodiment, the graphics selection module 228 queries the graphics database 229 based on multiple attributes, such as a graphic of pizza for a pizza restaurant along with text from a review provided by the user's friend.

In some embodiments, the graphics selection module 228 requests a modality where the modality is based on the danger index. The modality may be part of the graphic for the entity or a separate graphic. The modality reflects the risk associated with the entity. For example, the graphics selection module 228 may request a flashing red outline for the entity if the danger is imminent. Conversely, the graphics selection module 228 may request a transparent image of the entity if the danger is not imminent.

In some embodiments, the graphics selection module 228 determines the modality based on the position of the entity. For example, where the entity is a pedestrian walking on a sidewalk along the road, the graphics selection module 228 determines that the modality is a light graphic. The graphics selection module 228 retrieves the graphic Gg from the graphics database 229.

The scene computation module 230 can be software including routines for positioning the graphic to correspond to a user's eye frame. In some embodiments, the scene computation module 230 can be a set of instructions executable by the processor 255 to position the graphic to correspond to the user's eye frame. In some embodiments, the scene computation module 230 can be stored in the memory 257 of the first client device 103 and can be accessible and executable by the processor 255.

In one embodiment, scene computation module 230 transforms the graphic and the modality to the driver's eye box. The eye box is an area with a projected image generated by the heads-up display 231 that is within the driver's field of view. The eye box frame is designed to be large enough that the driver can move his or her head and still see the graphics. If the driver's eyes are too far left or right of the eye box, the graphics will disappear off the edge. Because the eye box is within the driver's field of vision, the driver does not need to refocus in order to view the graphics. In some embodiments, the scene computation module 230 generates a different eye box for each user during calibration to account for variations in height and interocular distance (i.e. distance between the eyes of the driver).

The scene computation module 230 adjusts the graphics to the view of the driver and to the distance between the sensor and the driver's eye box. In one embodiment, the scene computation module 230 computes the graphics in the eye frame G_{eye} based on the spatial position relative to the first client device 103 (x, y, z)ₛ and the graphics Gg. First the transformation from the sensor frame to the eye frame (Tₛ₋ₑ) is computed. Then the scene computation module 230 multiplies the Tₛ₋ₑ by the transformation from graphics to sensor frame (T_{g-s}), resulting in the transformation from graphics to eye frame (T_{g-e}). Then the graphics Gg are projected into a viewport placed at a T_{g-e} pose. The scene computation module 230 computes the eye frame so that the driver does not have to refocus when switching the gaze between the road and the graphics. As a result, displaying graphics that keep the same focus for the driver may save between 0.5 and 1 second in reaction time, which for a first client device 103 is travelling at 90 km/h, results in 12.5 to 25 meters further to react to an entity.

In some embodiments, the scene computation module 230 generates instructions for the heads-up display 231 to superimpose the graphics on the location of the entity. In another embodiment, the scene computation module 230 generates instructions for the heads-up display 231 to display the graphics in another location, or in addition to superimposing the graphics on the real entity. For example, the bottom or top of the heads-up display image could contain a summary of the graphics that the user should be looking for on the road.

In some embodiments, the scene computation module 230 determines the field of view for each eye to provide binocular vision. For example, the scene computation module 230 determines an overlapping binocular field of view, which is the maximum angular extent of the heads-up display 231 that is visible to both eyes simultaneously. In some embodiments, the scene computation module 230 calibrates the binocular FOV for each driver to account for variations in interocular distance and driver height.
The user interface module 232 can be software including routines for generating graphical data for providing user interfaces. In some embodiments, the user interface module 232 can be a set of instructions executable by the processor 255 to provide the functionality described below for generating graphical data for providing user interfaces. In some embodiments, the user interface module 205 can be stored in the memory 257 of the cloud server 101 and can be accessible and executable by the processor 255.

In some embodiments, the user interface module 232 generates a user interface for users to provide message to each other through the content application 199. For example, a first user is connected to a second user in a social graph 295 and wants to let the second user know that a particular location is a possible venue for having a party. In some embodiments, the user interface generates graphical data for a user to define graphics so that when other users see the graphic, they will know right away who send the graphic. In some other embodiments, the user interface engine generates a user interface where the user can provide feedback, such as whether certain data was relevant or irrelevant. The user interface module 232 transmits the feedback via the communication module 221 to the content selection module 224 for updating the filter settings. In some embodiments, the user interface module 232 generates a user interface where the user can provide information about connections to other users. For example, a driver can provide user input about the driver's status as following another first client device 103.

### Example Graphic Representations

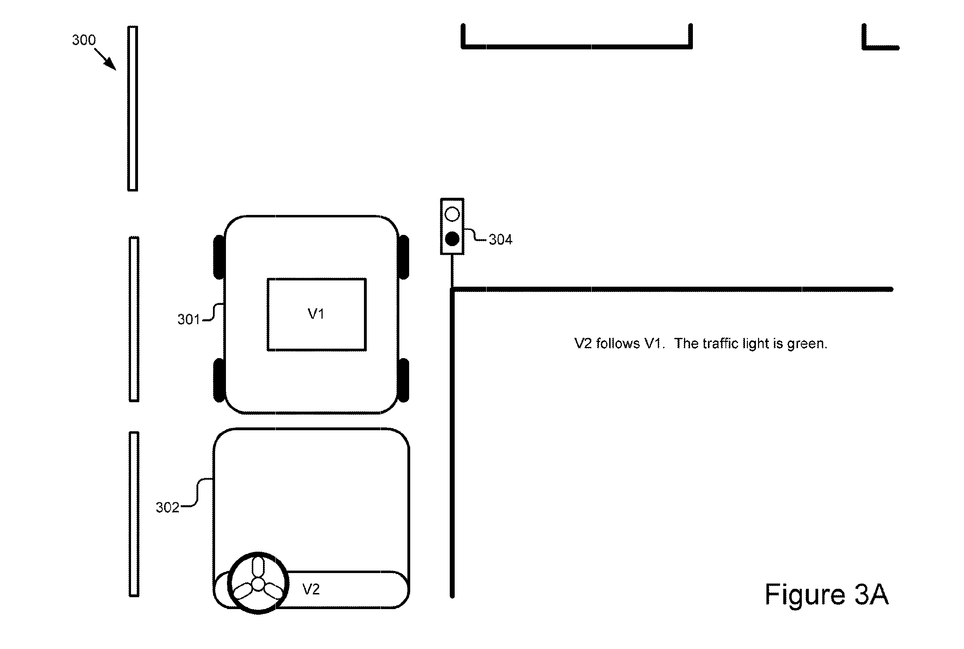

Figure 3A is an example graphic representation 300 of a first car being followed by a second car. In this example, a first vehicle 301 approaches a green lightwith a second vehicle 302 behind the first vehicle 301. The content selection module 224 determines that the second vehicle 302 is following the first vehicle 301 based on how long they have been travelling together, map data from the map server 190, the fact that the driver of the second vehicle 302 is friends with the driver of the first vehicle, or as expressly provided by the drivers via a user interface.

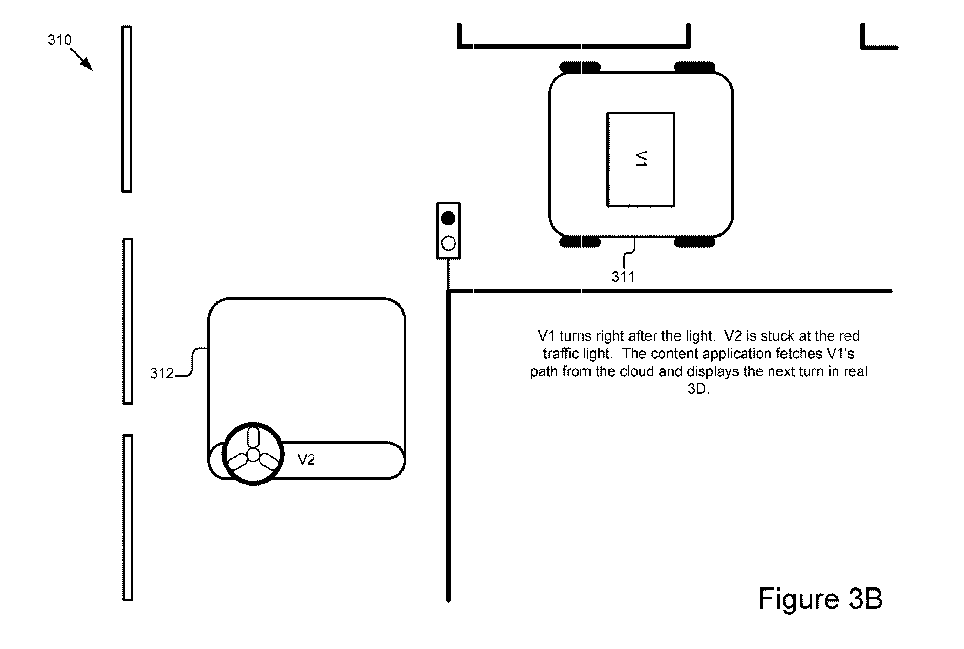

Figure 3 B is an example graphic representation 310 of the first car turning while the second car is stuck at a light. The first vehicle 311 takes a right-turn at the light before it turns red. The second vehicle 302 waits at the red light.

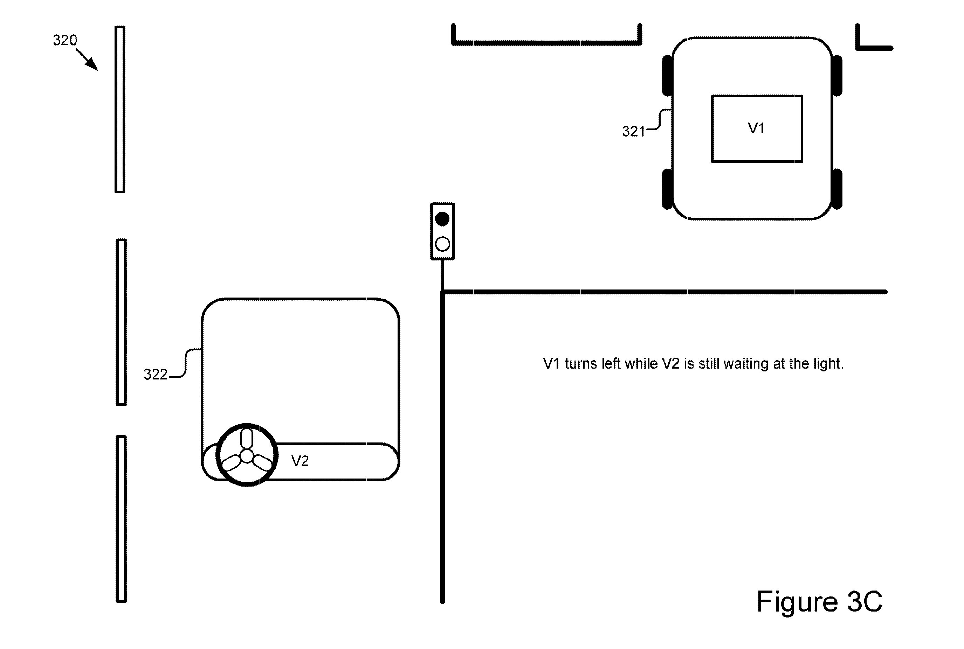

Figure 3C is an example graphic representation 320 of the first car making a left-hand turn while out of view of the second car. The first vehicle 321 makes a left turn while the second vehicle 332 is still stuck at the light. As a result, the second vehicle 322 cannot see the first vehicle 331 turn.

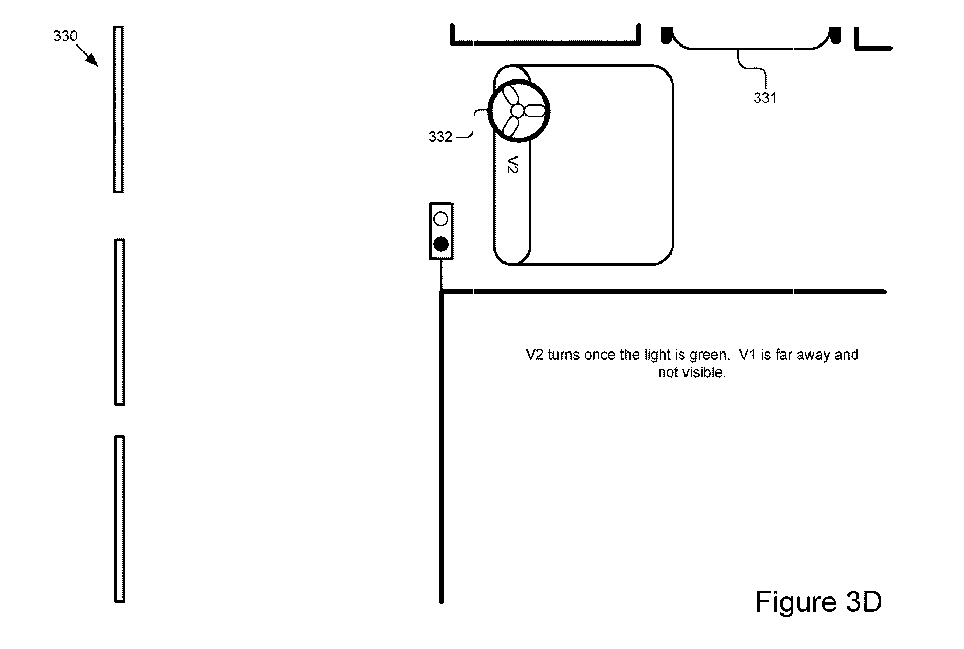

Figure 3D is an example graphic representation 330 of the first car 331 being out of view of the second car. By the time the light turns green and the second vehicle 332 makes the turn the first vehicle 331 is out of view of the second vehicle 332.

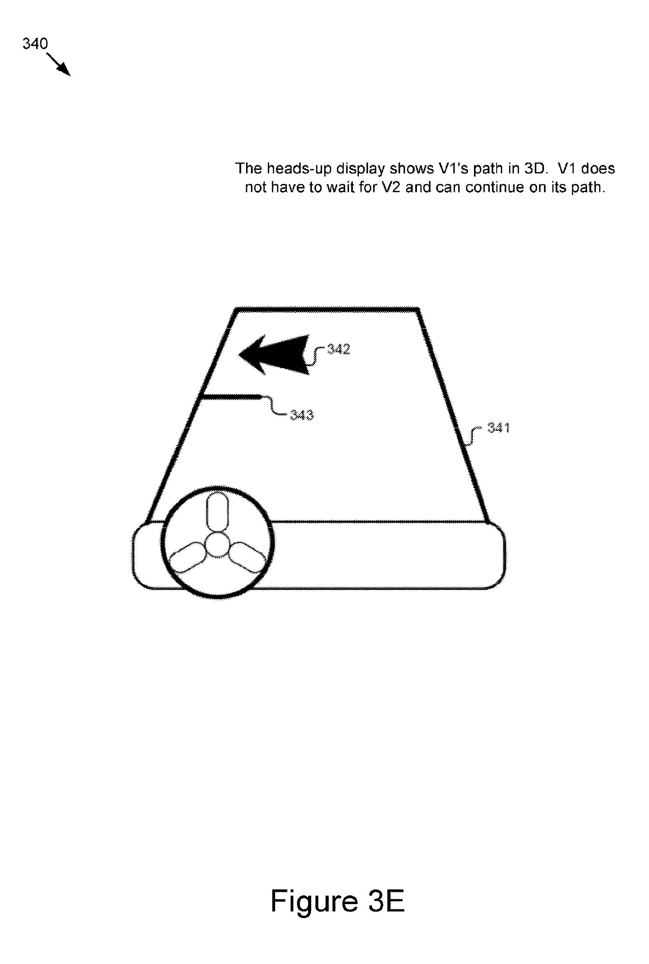

Figure 3E is a graphic representation 340 example of a heads-up display 341. The heads-up display 341 for the second vehicle includes a left-hand array 342 that is superimposed on the road where the driver should turn. As a result, the first vehicle does not have to wait for the second vehicle to catch up because the content application 199 provides directions for the second vehicle to follow the first vehicle. This will reduce travel time and stress in having to follow another car.

In the above, illustrated are examples of graphic representations in the situation where the first vehicle 301 and the second vehicle 302 drive together and the second vehicle 302 (or the content application 199 of the second vehicle 302) displays content relating to the first vehicle 301. The content displayed on the heads-up display 341 however is not limited to the above examples, but may be any content that is sent from the cloud server 101 and that the contents application 199 judges as relevant. Examples of such content include shops, restaurants, events, roadway objects (such as pedestrians, buildings, lane markers, obstacles) and the like.

### Example Method

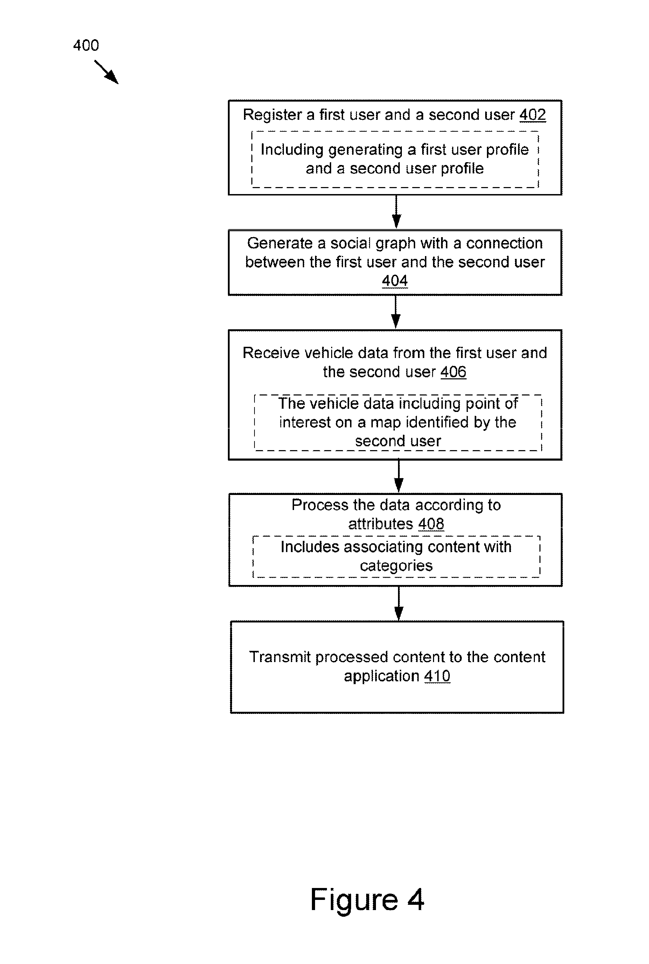

Figure 4 is a flowchart of an example method for organizing content with a cloud application. In some embodiments, the method 400 may be performed by modules of the cloud application 111 stored on the cloud server 101. For example, the cloud application 111 may include a communication unit 202, a social network module 204 and a processing unit 206. In other embodiments, the modules may be part of the content application 199 stored on the first client device 103 or the mobile client device 188.

The social network module 204 registers 402 a first user and a second user. This may include generating a first user profile and a second user profile. The social network module 204 generates 404 a social graph with a connection between the first user and the second user. For example, the first user and the second user are friends. The processing unit 206 receives 406 vehicle data from the first user and the second user. The vehicle data may include a point of interest on a map identified by the second user. The processing unit 206 processes 408 the vehicle data according to attributes. For example, the processing includes associating content with categories, such as the categories that correlate to the user profile. The communication unit 202 transmits 410 the processed content to the content application.

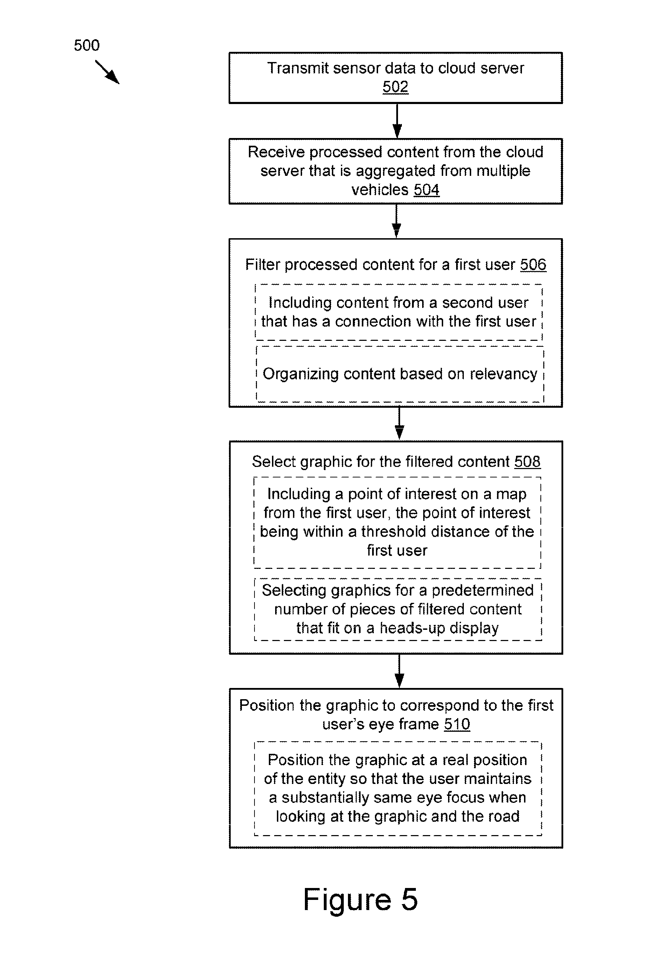

Figure 5 is a flowchart of an example method for generating content for a heads-up display. In some embodiments, the method 500 may be performed by modules of the content application 199 stored on the first client device 103 or the mobile client device 188. For example, the content system 199 may include a communication module 221, a content selection module 224, a relevancy module 226, the graphics selection module 228, and the scene computation module 230.

The communication module 221 transmits 502 sensor data to the cloud server 101. For example, the sensor data includes entities identified by the detection module 222. The communication module 221 receives 504 processed content from the cloud server 101 that is aggregated from multiple vehicles. The content selection module 224 filters 506 processed content for a first user. For example, the content selection module 224 selects content from a second user that has a connection with the first user. The second user may be determined based on the social graph 295 received from the cloud server 101, or may be determined as a user that drives the same roadway as the first user drives for a predetermined time or longer. For another example, the content selection module 224 selects content of an element within a predetermined range from the first user (the first client device). In some embodiments, the relevancy module 226 organizes the content based on relevancy. For example, the relevancy module 226 ranks the filter content based on the importance (relevancy) for the first user.

The graphics selection module 228 selects 508 a graphic for the filtered content. For example, the graphic includes a point of interest on a map from the first user, the point of interest being within a threshold distance of the first user. In another example, the graphics selection module 228 selects graphics for a predetermined number of pieces of filtered content (for example, the predetermined number of most relevant pieces of filtered content) that fit on a heads-up display. The scene computation module 230 positions 510 the graphic to correspond to the first user's eye frame. For example, the scene computation module 230 positions the graphic at a real position of the entity so that the user maintains a substantially same eye focus when looking at the graphic and the road.

The embodiments of the specification can also relate to an apparatus for performing the operations herein. This apparatus may be specially constructed for the required purposes, or it may include a general-purpose computer selectively activated or reconfigured by a computer program stored in the computer. Such a computer program may be stored in a computer-readable storage medium, including, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with non-volatile memory, or any type of media suitable for storing electronic instructions, each coupled to a computer system bus.

The specification can take the form of some entirely hardware embodiments, some entirely software embodiments, or some embodiments containing both hardware and software elements. In some preferred embodiments, the specification is implemented in software, which includes, but is not limited to, firmware, resident software, microcode, etc.

Furthermore, the description can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A data processing system suitable for storing or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including, but not limited to, keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem, and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the specification is not described with reference to any particular programming language. It will be appreciated that a variety of programming languages may be used to implement the teachings of the specification as described herein.

The foregoing description of the embodiments of the specification has been presented for the purposes of illustration and description. It is not intended to be exhaustive or to limit the specification to the precise form disclosed. Many modifications and variations are possible in light of the above teaching. It is intended that the scope of the disclosure be limited not by this detailed description, but rather by the claims of this application. As will be understood by those familiar with the art, the specification may be embodied in other specific forms without departing from the spirit or essential characteristics thereof. Likewise, the particular naming and division of the modules, routines, features, attributes, methodologies, and other aspects are not mandatory or significant, and the mechanisms that implement the specification or its features may have different names, divisions, or formats. Furthermore, as will be apparent to one of ordinary skill in the relevant art, the modules, routines, features, attributes, methodologies, and other aspects of the disclosure can be implemented as software, hardware, firmware, or any combination of the three. Also, wherever a component, an example of which is a module, of the specification is implemented as software, the component can be implemented as a standalone program, as part of a larger program, as a plurality of separate programs, as a statically or dynamically linked library, as a kernel-loadable module, as a device driver, or in every and any other way known now or in the future to those of ordinary skill in the art of computer programming. Additionally, the disclosure is in no way limited to embodiment in any specific programming language, or for any specific operating system or environment. Accordingly, the disclosure is intended to be illustrative, but not limiting, of the scope of the specification, which is set forth in the following claims.
The disclosure includes a system and method for generating cloud-based content for a heads-up display. The cloud server includes a processor and a memory storing instructions that, when executed, cause the system to: register the first user and the second user, generate a social graph between with a connection between the first user and the second user, receive vehicle data from the first user and the second user, and process the data according to attributes. The system includes a processor and a memory storing instructions that, when executed, cause the system to: transmit sensor data to a cloud server, receive processed content from the cloud server that is aggregated from multiple vehicles, filter the processed content for a first user, selecting a graphic for the filtered content, and position the graphic to

## Claims

1. A method performed by a processor-based computing device, comprising:
transmitting sensor data to a cloud server;
receiving processed content from the cloud server that is aggregated from multiple vehicles;
filtering the processed content for a first user;
selecting a graphic for the filtered content; and
positioning the graphic to correspond to the first user's eye frame.

2. The method of claim 1, wherein filtering the processed content for the first user includes keeping content from a second user that has a connection with the first user.

3. The method of claim 1 or 2, wherein selecting the graphic for the filtered content including a point of interest on a map from the first user, the point of interest being within a threshold distance of the first user.

4. The method of any one of claims 1 to 3, wherein prior to receiving processed content from the cloud server, the cloud server:
registers the first user and the second user;
generates a social graph between with a connection between the first user and the second user;
receives vehicle data from the first user and the second user; and
processes the data according to attributes.

5. The method of claim 4, wherein the vehicle data includes a point of interest on a map identified by the second user.

6. The method of claim 4 or 5, wherein processing the data according to attributes includes associating content with categories and wherein filtering the processed content is based on the categories.

7. The method of claim 6, further comprising:
generating a user profile for the first user, the user profile including categories; and
wherein filtering the processed content for the first user includes filtering the processed content based on the processed content including the categories in the user profile.

8. The method of any one of claims 1 to 7, further comprising:
organizing the filtered content according to relevancy; and
selecting graphics for a predetermined number of pieces of filtered content that fit on a heads-up display.

9. The method of any one of claim 1 to 8, further comprising:
comparing current sensor data to historical sensor data to determine that the first user is in a hurry based on at least one of leaving less room between a first client device and a second client device and using brakes more frequently; and
wherein filtering the processed content is further based on the user being in the hurry.

10. The method of any one of claim 1 to 9, wherein the processed content includes information about an entity as detected by a first client device that views the entity before the first user.

11. A computer program when executed on a computer causes the computer to execute steps of the method of any one of claims 1 to 10.

12. A system comprising:
a processor; and
a tangible, non-transitory memory storing the computer program of claim 11.
